# EUROPÄISCHE PATENTSCHRIFT

(11) **EP 0 760 770 B1**
(45) Veröffentlichungstag und Bekanntmachung des Hinweises auf die Patenterteilung: **08.04.1998**
(21) Anmeldenummer: 95920882.8
(22) Anmeldetag: 24.05.1995
(51) Int. Cl.: B62D 65/00, B23K 37/04

(54) **VERFAHREN UND VORRICHTUNG ZUM ZUFÜHREN, SPANNEN UND BEARBEITEN VON BAUTEILEN EINER FAHRZEUGKAROSSERIE**
PROCESS AND APPARATUS FOR FEEDING, CLAMPING AND MACHINING PARTS OF A VEHICLE BODY
PROCEDE ET DISPOSITIF PERMETTANT D'AMENER, DE MAINTENIR EN POSITION ET D'USINER LES PIECES D'UNE CARROSSERIE DE VEHICULE

(30) Priorität: 28.05.1994 DE 4418755
(43) Veröffentlichungstag der Anmeldung: 12.03.1997
(73) Patentinhaber: KUKA Schweissanlagen GmbH, 86165 Augsburg (DE)
(72) Erfinder: BACH, Dieter, D-86159 Augsburg (DE); THORWARTH, Paul, D-86156 Augsburg (DE)
(74) Vertreter: Ernicke, Hans-Dieter, Dipl.-Ing.
(86) Internationale Anmeldenummer: EP9501980
(87) Internationale Veröffentlichungsnummer: WO9532886

(56) Entgegenhaltungen:
- EP-A- 0 513 453
- EP-A- 0 582 117
- WO-A-95/12515
- DE-A- 3 840 033
- US-A- 4 905 884
- US-A- 5 184 766

## Beschreibung

Die Erfindung betrifft ein Verfahren und eine Vorrichtung zum Zuführen, Spannen und Bearbeiten von Bauteilen einer Fahrzeugkarosserie in einer Bearbeitungsstation mit den Merkmalen im Oberbegriff des Verfahrens- und Vorrichtungshauptanspruches.

Die US-A-5,184,766 zeigt ein solches Verfahren mit der zugehörigen Vorrichtung. Die Bauteile der Fahrzeugkarosserie werden an einem oder mehreren Spannrahmen gespannt und in dieser Form der Bearbeitungsstation zugeführt. Die Spannrahmen mit den Bauteilen werden von mehreren mehrachsigen Industrierobotern gehandhabt und zugeführt. Die Spannrahmen werden dabei von den Robotern an eine spezielle Zustellvorrichtung abgegeben und dann von dieser Zustellvorrichtung gehalten und zugeführt. Die Spannrahmen haben untereinander keinen Kontakt und keine gemeinsame Funktion. Sie sind an den stationären Zustellvorrichtungen beidseits der Transferlinie eigenständig gehalten. Die Roboter werden nach Übergabe der Spannrahmen an die Zustellvorrichtung für Bearbeitungsaufgaben, Schweißen, Clinchen und dgl. herangezogen.

Die DE-A 38 40 033 zeigt eine Variante mit beidseits der Transferlinie angeordneten Spannrahmen. Die Spannrahmen werden durch eine Art Paternoster-Aufzug zugeführt.

Oberhalb der Transferlinie ist ein mehrachsiger Roboter vorhanden, der die Spannrahmen aus einem Magazin mit verschiedenen Werkzeugen bestückt. Die Spannrahmen transportieren in diesem Fall keine Karosseriebauteile. Im Bodenbereich der Bearbeitungsstation sind beidseits der Transferlinie weitere Roboter für Bearbeitungsvorgänge, z. B Schweißarbeiten etc., angeordnet. Diese Roboter haben keine Handhabungs- und Zuführfunktion für die Spannrahmen.

Ein ähnliches Verfahren nebst zugehöriger Vorrichtung sind aus der DE-A-37 24 279 bekannt. In die Bearbeitungsstation werden mehrere Spannrahmen mittels Förderern transportiert, welche längs einer Transferlinie umlaufen. Mit den Spannrahmen werden zugleich die Bauteile einer Fahrzeugkarosserie zugeführt und in der Bearbeitungsstation positioniert und gespannt, so daß sie nachfolgend mit Schweißmaschinen geheftet werden können. Diese Anordnung ist sehr bauaufwendig, platzraubend und wenig flexibel. Die Dach- und Seitenrahmen werden über eine Positionier- und Stützbauteilgruppe miteinander über Zapfen verbunden. Diese Spannrahmengruppe wird dann über eine weitere Positionier- und Stützbauteilgruppe mit einem Bezugszapfen an einem stationären bogenförmigen Tragwerk ausgerichtet. Zwischen den beiden Seitenrahmen und dem Bodenrahmen besteht keine direkte Verbindung. Die Ausrichtung dieser Rahmen erfolgt mittelbar über eine bodenseitige Richtplatte und das bogenförmige Tragwerk. Diese Zuordnung kann zu Toleranzproblemen führen. Außerdem ist der Bauaufwand mit dem bogenförmigen Tragwerk und den Spannrahmenförderern ziemlich hoch. Die umlaufenden Spannrahmenförderer haben zudem nur eine beschränkte Beweglichkeit.

Aus der US-C-2,779,092 ist eine ähnliche Fertigungsstraße mit Hängeförderern zum Zuführen der verschiedenen beladenen Spannrahmen bekannt. Die Spannrahmen werden an einer Bodenpalette sowie untereinander abgestützt und verriegelt.

Die DE-A-28 10 822 zeigt eine Bearbeitungsstation mit Schweißrobotern und wechselbaren Spannrahmen, die als Seitenrahmen ausgebildet und mittels einer eigenständigen Wechseleinrichtung längs der Transferlinie an Schienenführungen verschoben und zugestellt werden. Die Karosseriebauteile werden hier getrennt von den Spannrahmen zugeführt.

Die DE-A-41 13 529 lehrt eine robotergestützte Montage von Motor- und Kofferraumhauben an Fahrzeugkarosserien. Die Roboter halten die Hauben mit Hilfe eines Greifgestells und mehreren Saugköpfen fest. Die Greifgestelle haben nur eine Haltefunktion und werden einzeln ohne Verbindung nach außen zu anderen Greifgestellen benutzt.

Aus dem DE-U-92 09 686 ist es bekannt, Spannrahmen mit Karosseriebauteilen in eine Bearbeitungsstation zu transportieren, zu positionieren und die Bauteile für einen Bearbeitungsvorgang zu spannen. Für die Seitenrahmen sind Trommelmagazine und eine Zuführvorrichtung vorgesehen, wobei die Seitenrahmen an der Arbeitsstelle über stationäre Rahmenaufnahmen positioniert werden.

Es ist Aufgabe der vorliegenden Erfindung, eine bessere Möglichkeit zum Handhaben, insbesondere Zuführen und Positionieren von Spannrahmen und Bauteilen aufzuzeigen.

Die Erfindung löst diese Aufgabe mit den Merkmalen im Verfahrens- und Vorrichtungshauptanspruch.

Der Einsatz von ein oder mehreren mehrachsigen Manipulatoren zur Handhabung der Spannrahmen bietet eine wesentlich höhere Bewegungsfreiheit und funktionale Flexibilität als die vorbekannten auf festen Bahnen umlaufenden Förderer. Die Spannrahmen können von den vorzugsweise als Industrieroboter ausgebildeten Manipulatoren aus einem Magazin selektiv und schnell gegriffen werden. Sie können ferner auf gekrümmten Bewegungsbahnen herangeführt und miteinander in einer Einfädelbewegung in Verbindung gebracht werden.

Die vorzugsweise aneinander abgestützten, gegenseitig positionierten und verriegelten Spannrahmen bilden ein Spannrahmengehäuse, das die Fahrzeugkarosserie bzw. deren Bauteile käfigartig an mehreren Seiten umgibt. Vorzugsweise ist das Spannrahmengehäuse selbsttragend und über vier Seiten ringförmig oder über fünf bzw. sechs Seiten kubisch geschlossen. Die Spannrahmen haben durch die gegenseitige Abstützung und Positionierung einen inneren direkten Toleranzbezug, der eine genauere Positionierung und Spannung der Karosseriebauteile ermöglicht. Eine Ausrichtung über externe Bezugspunkte wie beim Stand der Technik ist nicht erforderlich, kann alternativ aber ebenfalls durchgeführt werden.

Das Spannrahmengehäuse wird lediglich als ganzes auf einem Hubtisch, einer Richtplatte oder dergleichen in der Bearbeitungsstation positioniert und damit im Bezug zu den Bearbeitungsvorrichtungen gebracht. Zusätzliche Ausrichtelemente, wie bogenförmige Tragwerke oder dergleichen sind entbehrlich. Dadurch wird der Bauaufwand gegenüber vorbekannten Konstruktionen deutlich verringert.

Vorzugsweise werden die einzelnen Karosseriebauteile von den verschiedenen Spannrahmen zugeführt. Alternativ ist es möglich, zumindest einzelne Karosseriebauteile und die Spannrahmen getrennt zuzuführen, indem z.B. auf einem Bodenrahmen oder einer Palette eine in einer vorherigen Rüststation aufgebaute und zusammengeclipste Karosserie in die Bearbeitungsstation gebracht wird, wobei mit den Manipulatoren leere Spannrahmen zugeführt werden. Die Erfindung erlaubt es darüber hinaus, noch weitere Karosseriebauteile, wie zum Beispiel einen Vorbau und/oder eine Heckgruppe mit dazupassenden Spannrahmen anzufügen und diese vorzugsweise in das Spannrahmengehäuse zu integrieren.

Von Vorteil ist ferner, daß die Bearbeitungsstation eine hohe Flexibilität und die Bearbeitung beliebiger Karosserietypen im freien Mix erlaubt. Dem kommen die Manipulatoren besonders entgegen. Sie können schneller als die vorbekannten Systeme die Spannrahmen bei einem Typenwechsel austauschen. Dem kommen die in der Bearbeitungsstation angeordneten Magazine für Karosseriebauteile und/oder Spannrahmen besonders entgegen.

Zudem können die Manipulatoren mehrere Aufgaben übernehmen und die Karosseriebauteile auch bearbeiten. Dazu können sie die Spannrahmen loslassen und stattdessen Werkzeuge greifen. Durch die Multifunktionalität können die bisher üblichen Förderer eingespart werden, was den Bauaufwand und Platzbedarf wesentlich verringert.

Die erfindungsgemäße Bearbeitungsstation ermöglicht die Durchführung mehrerer Bearbeitungsvorgänge in einer einzigen Station. Dies betrifft z.B. in der Fügefolge Spannen, Heften und Ausschweißen der Fahrzeugkarosserie. Zudem können andere Bearbeitungen, wie Kleben, Bohren, Montieren etc. durchgeführt werden. Durch die funktionale Integration können Stationen in der Transferstraße eingespart werden, was den Bauaufwand der Transferstraße verringert und die Kosten deutlich senkt. Die Bearbeitungsstation kann auch außerhalb einer Transferstraße stehen.

Durch das selbsttragende Spannrahmengehäuse ist es möglich, die Spannrahmen an der Karosserie zu belassen und als komplette Einheit weiterzutransportieren. Alternativ können einzelne Spannrahmen entfernt werden, wenn die Karosserie z.B. nach dem Heften eine ausreichende Eigenstabilität erreicht hat, um Platz für weitere Bearbeitungsvorgänge, z.B. zum Ausschweißen, zu schaffen.

In der Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Fig. 1 und 2:: eine Bearbeitungsstation mit einem Spannrahmengehäuse in Stirnansicht und Draufsicht,
- Fig. 3 und 4:: das Spannrahmengehäuse in Seitenansicht und Stirnansicht,

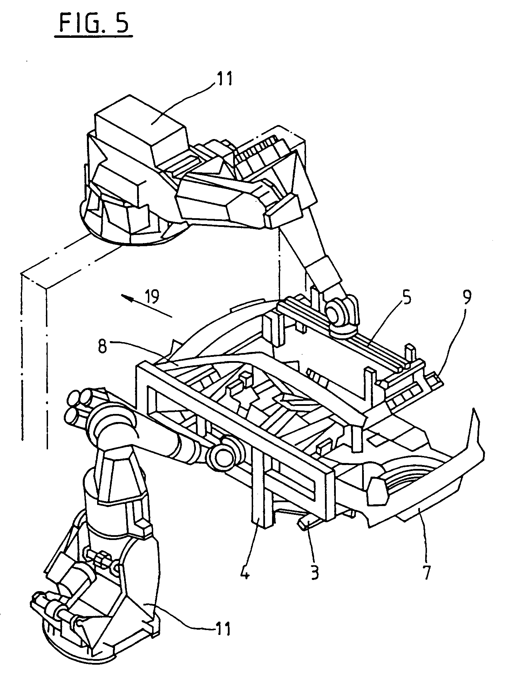

- Fig. 5:: die Bearbeitungsstation in einer perspektivischen Darstellung und
- Figur 6:: die Bearbeitungsstation mit einem Magazin in Draufsicht und geklappter Seitenansicht.

In den Zeichnungen ist eine Bearbeitungsstation (1) für Fahrzeugkarosserien (6) dargestellt, die vorzugsweise in eine Transferstraße (nicht dargestellt) integriert ist. Sie kann aber auch separat und außerhalb einer Transferstraße angeordnet sein.

Die Fahrzeugkarosserie (6) besteht aus mehreren Bauteilen, zum Beispiel einer Bodengruppe (7), zwei Seitenteilen (8) und einem Dachteil (9). Zum Dachteil (9) können noch Front- und Heckteile hinzutreten. Die genannten Bauteile (7,8,9) können ihrerseits als vormontierte, mehrteilige Baugruppen ausgebildet sein.

Die Bodengruppe (7) ist auf einem Bodenrahmen (3) vormontiert und wird mit diesem auf einem Förderer (10), zum Beispiel einem Shuttle, einer Rollbahn oder dergleichen in die Bearbeitungsstation (1) gebracht. Der Spannrahmen (3) hat einen an die Fördervorrichtung (10) angepaßte Form und ist zum Beispiel für eine Rollbahn als Palette ausgebildet.

Die anderen Bauteile, insbesondere die Seitenteile (8) und das oder die Dachteil(e) (9) werden mit nachfolgend näher beschriebenen Spannrahmen (4,5) zugeführt und in die Bearbeitungsstation (1) gebracht.

Die Spannrahmen (3,4,5) haben z.B. eine im wesentlichen rechteckige Form und bestehen aus zwei Längsträgern, die durch zwei oder mehr Querträger bzw. Querstreben miteinander verbunden sind. Sie können aber auch eine beliebige andere geeignete Form haben.

Die als Seitenrabmen (4) und Dachrahmen (5) ausgebildeten Spannrahmen werden im Bereich der Bearbeitungsstation (1) von mehrachsigen Manipulatoren (11) gehandhabt, die z.B. seitlich neben der Transferlinie am Boden positioniert sind. Der Manipulator (11) für den Dachrahmen (5) kann auch auf einem Portal oberhalb der Transferlinie angeordnet sein. Die Manipulatoren haben eine für die erforderliche Beweglichkeit geeignete Gestaltung und sind vorzugsweise als Industrieroboter, insbesondere Schwerlastroboter, mit sechs oder mehr Achsen ausgebildet.

Die Spannrahmen (3,4,5) sind im gezeigten Ausführungsbeispiel einteilig ausgebildet. Es kann sich alternativ aber auch um mehrteilige oder mehrgliedrige Spannrahmen handeln, die gegebenenfalls auch von verschiedenen Industrierobotern (11) gehandhabt werden.

Der Bodenrahmen (3) wird in der Bearbeitungsstation (1) auf einem geeigneten Unterbau (17) an einer vorgegebenen Stelle positioniert und in dieser Stellung durch geeignete Vorrichtungen festgehalten. Bei Verwendung eines Shuttle-Förderers kann der Unterbau (17) zum Beispiel als Hubtisch ausgebildet sein, der den Bodenrahmen (3) vom Förderer abhebt und zugleich in einer vorgebenen Stellung positioniert. Die Industrieroboter (11) sind auf diese Stellung des Bodenrahmens (3) eingerichtet und programmiert.

Die Industrieroboter (11) haben geeignete Greifwerkzeuge und greifen die für den jeweiligen Fahrzeugtyp vorgesehenen Spannrahmen (4,5) nebst der angehängten Bauteile (8,9) von einem nachfolgend näher beschriebenen Magazin (20) und führen diese an den Bodenrahmen (3) heran. Die beiden seitlichen Industrieroboter (11) setzen die Seitenrahmen (4) auf den Bodenrahmen (3). Die Seitenrahmen (4) stützen sich auf dem Bodenrahmen (3) ab und werden durch eine nachfolgend näher beschriebene Positioniervorrichtung (12) in eine vorbestimmte Position, insbesondere einen 90°-Winkel, zum Bodenrahmen (3) gebracht und in dieser Stellung verriegelt. Die Seitenrahmen (4) sind dann in einer vorzugsweise statisch bestimmten Stellung mit dem Bodenrahmen (3) fest verbunden.

Anschließend wird von dem auf einem Portal befindlichen Industrieroboter (11) der Dachrahmen (5) auf die beiden Seitenrahmen (4) aufgesetzt und mit einer weiteren Positioniervorrichtung (12) exakt positioniert und verriegelt. Der Dachrahmen (5) stützt sich dann ebenfalls in einer vorzugsweise statisch bestimmten Stellung auf den Seitenrahmen (4) ab und ist mit diesem fest verbunden.

Die Spannrahmen (3,4,5) bilden in ihrer gegenseitigen Abstützung und Verbindung ein käfigartiges Spannrahmengehäuse (2). Das Spannrahmengehäuse (2) ist durch die feste Rahmenverbindung selbsttragend und stützt sich über dem Bodenrahmen (3) auf dem Unterbau (17) ab. Das Spannrahmengehäuse (2) umgibt die Fahrzeugkarosserie (6) zumindest an vier Seiten, vorzugsweise den Längsseiten. Es ist dann ringförmig geschlossen.

In einer nichtdargestellten Variante können über zwei zusätzliche, an den Stirnseiten angesetzte Spannrahmen weitere Karosseriebauteile angefügt werden, z.B. eine Vorbaugruppe und eine Heckbaugruppe. Die Stirnrahmen können ebenfalls an den vorerwähnten Spannrahmen (3,4,5) abgestützt, positioniert und verriegelt werden, wobei sie auch in das Spannrahmengehäuse (2) integrierbar sind. Mit fünf oder sechs Spannrahmen wird die Fahrzeugkarosserie (6) kubisch umschlossen.

In einer weiteren nicht gezeigten Variante ist es möglich, den Bodenrahmen (3) mit zwei Seitenrahmen (4) und einem oder zwei Stirnrahmen zu einem steifen und selbsttragenden Spannrahmengehäuse zu verbinden. Bei zwei Stirnrahmen wird ein horizontaler Ringschluß gebildet.

Die Spannrahmen (3,4,5) haben geeignete Greif- und Spannwerkzeuge (nicht dargestellt), die auf die jeweiligen typenbezogenen Bauteile (7,8,9) abgestimmt sind. Mit diesen werden die Karosseriebauteile (7,8,9) in vorbestimmte Fügestellungen zueinander gebracht und gespannt. Hierbei kann auch mit Schablonen ähnlich der DE-OS 37 24 279 gearbeitet werden. Ferner können die Spannrahmen (3,4,5) weitere Werkzeuge zur Montage, Bauteilbearbeitung oder sonstigen Zwecken tragen.

Die Spannrahmen (3,4,5) können z.B. entsprechend der DE-A-28 10 822 oder dem DE-U-92 09 686 ausgebildet sein. Die vor- und nachstehend geschilderten Merkmale der Ausbildung und Handhabung der Spannrahmen gelten auch für die vorerwähnten und nicht dargestellten Stirnrahmen.

Die Bauteile (7,8,9) sind zu ihren jeweils zugehörigen Spannrahmen (3,4,5) exakt ausgerichtet. Im Spannrahmengehäuse (2) sind ihrerseits die Spannrahmen (3,4,5) exakt zueinander positioniert und ausgerichtet.

Dadurch passen die Bauteile (7,8,9) in der Fügestellung mit minimalen Toleranzen sehr genau zusammen.

Durch die direkte gegenseitige Abstützung und Positionierung der Spannrahmen (3,4,5) ist es möglich, die Spannrahmen (3,4,5) nach den Bauteildaten zu bearbeiten, insbesondere zu überfräsen. Dabei können auch die Aufsteck- und Verbindungsstellen mit den anderen Spannrahmen beziehungsweise der Positioniereinrichtung (12) einbezogen und ebenfalls nach den Bauteildaten ausgerichtet und bearbeitet werden. Die Verbindungsstellen der Spannrahmen (3,4,5) haben dann selbst einen direkten Bauteilbezug, was für minimalen Toleranzen sorgt.

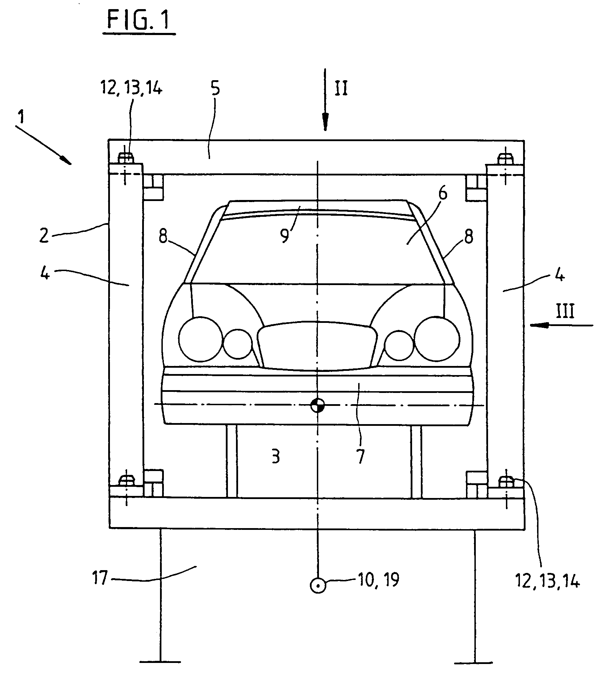

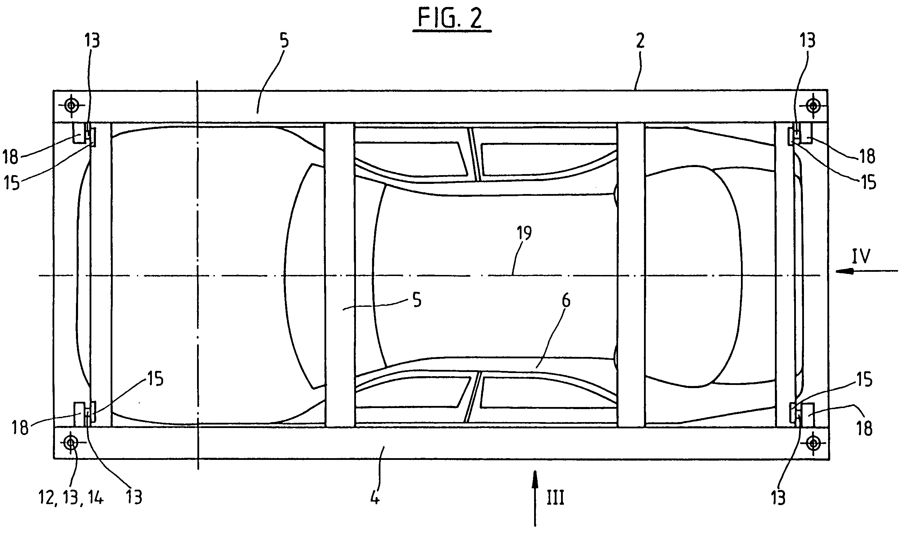

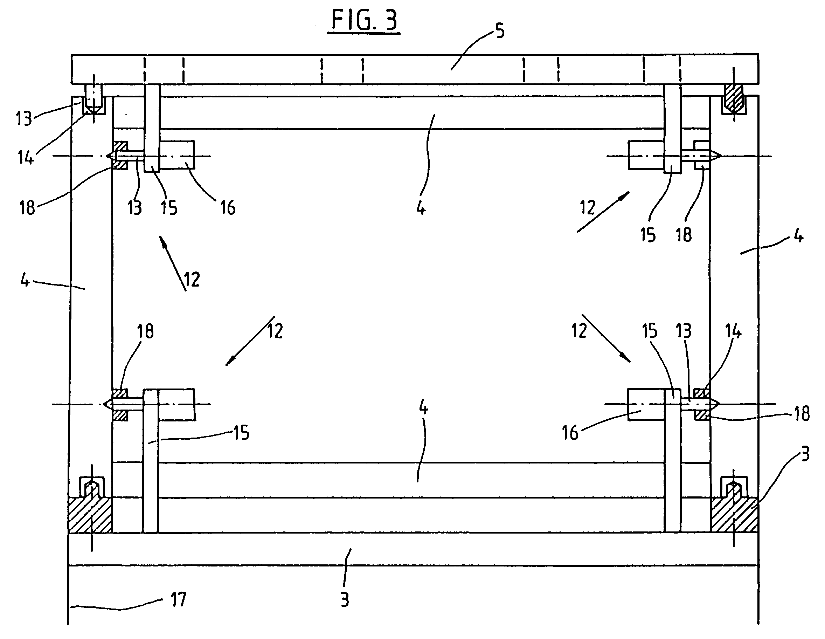

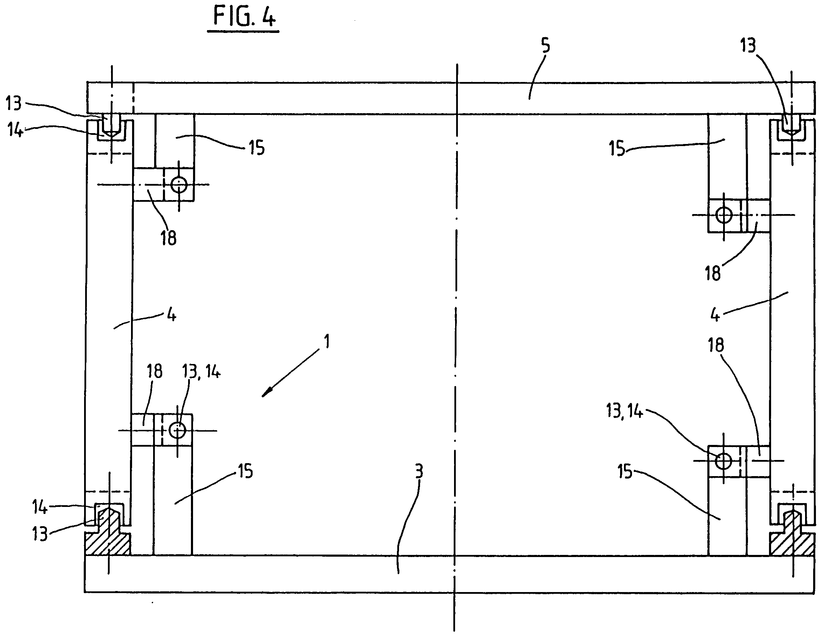

Fig. 1 zeigt das Spannrahmengehäuse (2) in einer Stirnansicht und Fig. 2 in einer Draufsicht gemäß Pfeil II von Fig. 1. Fig. 3 verdeutlicht in einer Seitenansicht gemäß Pfeil III von Fig. 2 die Gestaltung der Seitenrahmen (4) und der Positioniervorrichtungen (12) zum Bodenrahmen (3) und Dachrahmen (5). Fig. 4 gibt die zugehörige Stirnansicht gemäß Pfeil IV von Fig. 2 wieder.

Die Positioniereinrichtungen (12) halten die Spannrahmen (3,4,5) exakt im vorzugsweise gewählten 90°-Winkel zueinander und verhindern ein Verwinden oder Kippen des Spannrahmengehäuses (2). Die Seitenrahmen (4) liegen zumindest an den Ecken auf dem Bodenrahmen (3) flächig auf, wobei jeweils ein vom Bodenrahmen (3) aufragender fester oder beweglicher Zapfen (13) in eine korrespondierende Aufnahmeöffnung (14) an den Seitenrahmen (4) greift. Die Zuordnung kann auch umgekehrt sein. In gleicher Weise ruht der Dachrahmen (5) auf den beiden Seitenrahmen (4) und ist über vertikale Zapfen (13) und Aufnahmeöffnungen (14) fixiert.

Die Positioniervorrichtung (12) weist ferner an den Rahmenverbindungsstellen Stützen (15) auf, die zum Beispiel vom Bodenrahmen (3) vertikal nach oben ragen. Die Stützen (15) sind mit etwas Seitenabstand nach zwei Richtungen zu den vertikalen Pfosten der Seitenrahmen (4) angeordnet. Sie tragen bewegliche Zapfen (13), die vorzugsweise horizontal und in Längsrichtung der Transferlinie ausgerichtet sind. Die Zapfen (13) greifen in korrespondierende Aufnahmeöffnungen (14) an horizontalen Auslegern (18) der Seitenrahmen (4). In der bevorzugten Ausführungsform sind die Zapfen (13) angetrieben und zum Beispiel durch die Prozeßsteuerung fernsteuerbar. Die zugehörigen Zapfenantriebe (16) können an den Stützen (15) angeordnet sein. Die vorbeschriebenen Stützen (15) können auch am Dachrahmen (5) angeordnet sein. Die Zuordnung von Stützen (15) und Auslegern (18) kann auch anders ausgebildet sein.

Nach dem Spannen werden die Bauteile (7,8,9) bearbeitet, insbesondere geschweißt. In der Bearbeitungsstation (1) können die Bauteile (7,8,9) dabei sowohl geheftet, wie auch in der gleichen Station anschließend ausgeschweißt werden. Hierfür sind geeignete Schweißmaschinen vorgesehen. Sie können beispielsweise aus weiteren Robotern mit Schweißwerkzeugen bestehen. Ferner ist es auch möglich, Schweißwerkzeuge an den Spannrahmen (3,4,5) anzuordnen.

Vorzugsweise wird in der Station (1) eine komplexe Bauteilbearbeitung mit mehreren unterschiedlichen Bearbeitungsvorgängen und entsprechenden Werkzeugwechseln durchgeführt. Neben oder statt Schweißarbeiten können andere Vorgänge stattfinden, z.B. Teilemontage, Kleben, spanende Bearbeitung und dergleichen.

Ferner ist es in Abwandlung des gezeigten Ausführungsbeispiels möglich, während der Bearbeitung weitere Bauteile zuzuführen, zu spannen und mit der vorhandenen Fahrzeugkarosserie (6) zu verbinden, insbesondere zu schweißen und/oder auf andere Weise zu bearbeiten. Beispielsweise können so die Seiten- oder Dachteile der Fahrzeugkarosserie (6) schrittweise aus einer Innenschale, einer Außenschale und weiteren Anbauteilen oder -gruppen aufgebaut werden. Die Zufuhr der zusätzlichen Bauteile kann mit den vorhandenen Spannrahmen (4,5) oder mit zusätzlichen eigenen Spannrahmen erfolgen. Die vorhandenen Spannrahmen (4,5) können dazu von ihren Bauteilen (8,9) gelöst und entfernt werden. Alternativ können sie auch verbleiben und mit den zusätzlichen Spannrahmen kombinativ verbunden und ineinander verschachtelt werden.

Im gezeigten Ausführungsbeispiel sind die Industrieroboter (11) mit einem Wechselwerkzeug ausgerüstet. Nach dem Ansetzen der Spannrahmen (3,4,5) und der Bildung des Spannrahmengehäuses (2) wird das Greifwerkzeug abgekuppelt. Die Industrieroboter (11) können sich dann mit der Wechselkupplung geeignete Schweißwerkzeuge oder andere Werkzeuge greifen und die Bearbeitungsvorgänge durchführen. Der Werkzeugwechsel gegen Schweißwerkzeuge oder andere Werkzeuge kann auch nur von einem Teil der Industrieroboter (11) vorgenommen werden, während die anderen ihre Spannrahmen noch halten.

Ferner können während der Bearbeitung die Spannrahmen (3,4,5) von den Industrierobotern (11) wieder ergriffen und vom Spannrahmengehäuse (2) sowie den Karosseriebauteilen (7,8,9) gelöst und entfernt werden. Dies ist z.B. nach dem Heften möglich, wenn die Fahrzeugkarosserie (6) eine ausreichende Eigenstabilität hat. Die Industrieroboter (11) haben dann mehr Platz und Bewegungsfreiheit für die weiteren Bearbeitungsvorgänge, z.B. das Ausschweißen.

Nach der Beendigung der Karosseriebearbeitung wird der Bodenrahmen (3) wieder an die Fördervorrichtung (10) zum Weitertransport übergeben. Dabei werden die gehefteten und gegebenenfalls auch ausgeschweißten Karosseriebauteile (7,8,9) geschlossen mitbewegt. Für den Weitertransport ist es zum einen möglich, die Seitenrahmen (4) und den Dachrahmen (5) von den zugehörigen Bauteilen (8,9) zu lösen und in der Bearbeitungsstation (1) zu belassen. Hierzu ergreifen die Industrieroboter (11) nach einem erneuten Werkzeugwechsel wieder die jeweiligen Spannrahmen (4,5) und bewegen diese in eine Ausgangsstellung zurück.

Alternativ ist es auch möglich, das Spannrahmengehäuse (2) an der Fahrzeugkarosserie (6) zu belassen und mit dieser zusammen aus der Bearbeitungsstation (1) entlang der Transferlinie weiterzutransportieren.

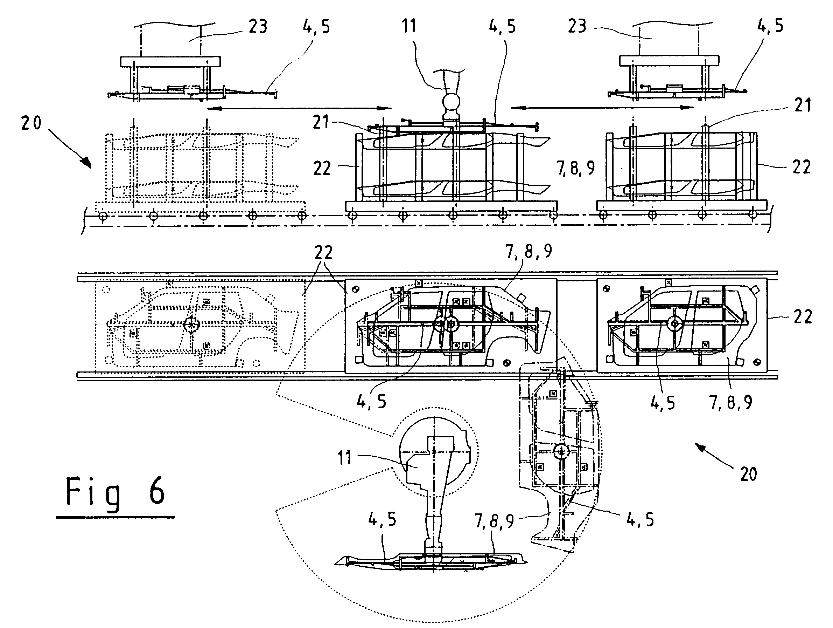

In der Bearbeitungsstation (1) können ein oder mehrere Magazine (20) für die Karosseriebauteile (7,8,9) und die Spannrahmen, insbesondere die Seitenrahmen (4) und Dachrahmen (5) vorhanden sein. Hier können in beweglichen Gestellen (22) verschiedene Bauteil- und Rahmentypen bevorratet sein, die auf unterschiedliche Karosserietypen und/oder Arbeitsfolgen abgestimmt sind. Fig. 6 zeigt diese Anordnung.

In den Gestellen (22) sind die vorbereiteten Bauteile (7,8,9) in mehreren Lagen und in griffgünstiger Stellung, z.B. übereinander liegend oder aufgereiht nebeneinander stehend gestapelt. Obenauf liegt in einer Aufnahme (21) der zugehörige Spannrahmen (4,5), sofern er nicht gerade vom Manipulator (11) benutzt wird. Mit dem Spannrahmen (4,5) können die Bauteile (7,8,9) vom Stapel gegriffen und aufgenommen werden.

Zur Übernahme wird das Gestell (22) mit dem benötigten Bauteil (7,8,9) bzw. Spannrahmen (4,5) in die zentrale Übernahmeposition gefahren, wo der Manipulator (11) mit seinem Greifwerkzeug den Spannrahmen (11) mit dem daran befindlichen Bauteil (7,8,9) greift, aus dem Gestell (22) hebt, wendet und in die gegenüberliegende Arbeitsstellung zuführt.

Nach der Bearbeitung wird der leere Spannrahmen (4,5) wieder zum Gestell (22) zurückgebracht. Wenn im nächsten Takt der gleiche Karosserietyp bearbeitet wird, bleibt der Spannrahmen (4,5) am Manipulator (11) und faßt nur das nächste Bauteil (7,8,9) vom Stapel. Bei einem Typwechsel wird der Spannrahmen (4,5) auf dem Gestell (22) bzw. dem Stapel abgelegt und das Gestell aus der Übernahmeposition entfernt. Ein anderes Gestell (22) mit dem passenden Bauteil (7,8,9) und dem obenaufliegenden Spannrahmen (4,5) wird in die Übernahmeposition gefahren und der Übernahmevorgang läuft in der vorbeschriebenen Weise ab.

Im gezeigten Ausführungsbeispiel bleiben die Spannrahmen (4,5) im Bereich der Bearbeitungsstation (1) und können in einem eigenen Lager magaziniert sein. Im Übernahmebereich sind vorzugsweise nur wenige, z.B. zwei Spannrahmen (4,5) in aktueller Benutzung. Für den Rahmenwechsel und den Transport von den Gestellen (22) ins Lager können Hängeförderer (23) oder andere geeignete Geräte vorhanden sein.

Die Gestelle werden in einer externen Rüstlinie (nicht dargestellt) mit vorgefertigten Karosseriebauteilen (7,8,9) beladen und dann mit geeigneten Förderern in den Bereich der Bearbeitungsstation (1) gefahren. Hier sind Warte- und Ausweichpositionen für die Gestelle (22) vorhanden. Ist ein Gestell (22) geleert worden, wird es weggefahren und neu beladen. Bleibt dabei der gleiche Karosserietyp in Bearbeitung, wird nur das Gestell (22) gewechselt, wobei der Spannrahmen (4,5) am Manipulator (11) verbleibt.

Bei einem Typwechsel wird der Spannrahmen (4,5) auf dem leeren Gestell (22) abgelegt, mit diesem aus der Übernahmeposition zur Seite gefahren und dann vom Hängeförderer (23) abgehoben. Er kann danach auf einen passendes neues beladenes Gestell (22) wieder abgelegt oder ins Lager gebracht und getauscht werden.

Variationen des gezeigten Ausführungsbeispiels sind in verschiedener Hinsicht möglich. Zum einen können die Bauteile (7,8,9) separat von den Spannrahmen (3,4,5) zugeführt werden, so daß die von den Manipulatoren (11) gehandhabten Spannrahmen (3,4,5) leer oder nur teilweise beladen sind. Auch der Bodenrahmen (3) kann bei entsprechender Gestaltung von einem Manipulator (11) gehandhabt werden.

Ferner kann die Positioniervorrichtung (12) der Spannrahmen (3,4,5) mit Stützen und Auslegern anders gestaltet sein, um die feste Verbindung zwischen den Spannrahmen herzustellen. Beispielsweise können hierbei auch schräge Streben oder dergleichen angeordnet sein. Die Verriegelung kann statt durch die beweglichen Zapfen an den Stützen auch auf andere Weise, zum Beispiel durch separate ausfahrbare Spannbolzen oder dergleichen realisiert werden. Die Spannrahmen (3,4,5) müssen sich auch nicht aneinander abstützen, sondern können ähnlich wie bei der DE-A-37 24 279 an einem Lehrgerüst eingehängt, positioniert und befestigt werden.

Die Spannrahmen (3,4,5) können ferner eine von der gezeigten Ausführungsform abweichende Gestalt besitzen. Sie können in der vorerwähnten Weise mehrteilig ausgebildet sein und dabei gegebenenfalls auch verschiedene Baugruppen eines Seitenteils, Dachteils oder einer Bodengruppe tragen. Die Baugruppen können dann untereinander noch in der Bearbeitungsstation verbunden, insbesondere geheftet und ausgeschweißt werden.

Weiterhin ist es möglich, die Industrieroboter von vornherein mit Werkzeugen und Zusatzachsen zu bestücken, wobei mit diesen Werkzeugen Bearbeitungsvorgänge ohne Lösen der Industrieroboter von den Spannrahmen durchgeführt werden können.

### BEZUGSZEZCHENLISTE

- 1: Bearbeitungsstation
- 2: Spannrahmengehäuse
- 3: Spannrahmen, Bodenrahmen
- 4: Spannrahmen, Seitenrahmen
- 5: Spannrahmen, Dachrahmen
- 6: Fahrzeugkarosserie
- 7: Bauteil, Bodengruppe
- 8: Bauteil, Seitenteil
- 9: Bauteil, Dachteil
- 10: Fördervorrichtung
- 11: Manipulator, Industrieroboter
- 12: Positioniervorrichtung
- 13: Zapfen
- 14: Aufnahmeöffnung
- 15: Stütze
- 16: Zapfenantrieb
- 17: Unterbau, Hubtisch
- 18: Ausleger
- 19: Transferlinie
- 20: Magazin
- 21: Aufnahme
- 22: Gestell
- 23: Hängeförderer

## Patentansprüche

1. Verfahren zum Zuführen, Spannen und Bearbeiten von Bauteilen (7,8,9) einer Fahrzeugkarosserie (6) in einer Bearbeitungsstation (1), wobei die Bauteile (7,8,9) an ein oder mehreren Spannrahmen (3,4,5) gespannt und separat oder an den Spannrahmen (3,4,5) zugeführt werden, wobei die Spannrahmen (3,4,5) von ein oder mehreren mehrachsigen Manipulatoren (11) gehandhabt und zugeführt werden, dadurch **gekennzeichnet**, daß die Manipulatoren (11) die Spannrahmen (3,4,5) zu einem die Bauteile (7,8,9) an mehreren Seiten umgebenden Spannrahmengehäuse (2) zusammensetzen.

2. Verfahren nach Anspruch 1, dadurch **gekennzeichnet**, daß der mit einer Bodengruppe (7) beladene Bodenrahmen (3) auf einem Förderer (10) in die Bearbeitungsstation (1) gebracht wird.

3. Verfahren nach Anspruch 1 oder 2, dadurch **gekennzeichnet**, daß die Manipulatoren (11) ein oder mehrere beladene Seitenrahmen (4) zuführen.

4. Verfahren nach Anspruch 1, 2 oder 3, dadurch **gekennzeichnet**, daß die Manipulatoren (11) ein oder mehrere beladene Dachrahmen (4) zuführen.

5. Verfahren nach Anspruch oder einem der folgenden, dadurch **gekennzeichnet**, daß die Manipulatoren (11) mit den Spannrahmen (4,5) die Karosseriebauteile (7,8,9) von einem Magazin (20) entnehmen.

6. Verfahren nach einem der Ansprüche 1 bis 5, dadurch **gekennzeichnet**, daß die Spannrahmen (3,4,5) aneinander abgestützt, positioniert und verriegelt werden.

7. Verfahren nach Anspruch 1 oder einem der folgenden, dadurch **gekennzeichnet**, daß die Manipulatoren (11) die Spannrahmen (3,4,5) nach der Positionierung freigeben, gegen Bearbeitungswerkzeuge wechseln und die Bauteile (7,8,9) bearbeiten.

8. Verfahren nach Anspruch 1 oder einem der folgenden, dadurch **gekennzeichnet**, daß die Manipulatoren (11) die Spannrahmen (3,4,5) während oder nach der Bearbeitung aus dem Gehäuseverbund und von den Bauteilen (7,8,9) lösen und an eine Aufnahme (21) zurückführen.

9. Verfahren nach Anspruch 1 oder einem der folgenden, dadurch **gekennzeichnet**, daß die Manipulatoren (11) mehrere Bearbeitungsvorgänge an den Bauteilen (7,8,9) ausführen.

10. Vorrichtung zum Zuführen, Spannen und Bearbeiten von Bauteilen einer Fahrzeugkarosserie in einer Bearbeitungsstation mit mehreren Spannrahmen, wobei im Bereich der Bearbeitungsstation (1) ein oder mehrere mehrachsige Manipulatoren (11) angeordnet sind, die mindestens einen mit Bauteilen (7,8,9) beladbaren Spannrahmen (3,4,5) handhaben, dadurch **gekennzeichnet**, daß die Spannrahmen (3,4,5) zu einem die Bauteile (7,8,9) an mehreren Seiten umgebenden Spannrahmengehäuse (2) zusammensetzbar sind.

11. Vorrichtung nach Anspruch 10, dadurch **gekennzeichnet**, daß die Bearbeitungsstation (1) ein Magazin (20) zur Bereitstellung von Bauteilen (7,8,9) und Spannrahmen (3,4,5) aufweist.

12. Vorrichtung nach Anspruch 10 oder 11, dadurch **gekennzeichnet**, daß das Magazin (20) mehrere bewegliche Gestelle (22) zur Bevorratung von Karosseriebauteilen (7,8,9) aufweist.

13. Vorrichtung nach Anspruch 10, 11 oder 12, dadurch **gekennzeichnet**, daß die Gestelle (22) mindestens eine Aufnahme (21) für Spannrahmen (3,4,5) aufweisen.

14. Vorrichtung nach Anspruch 10 oder einem der folgenden, dadurch **gekennzeichnet**, daß die Manipulatoren (11) Wechselkupplungen zum Tausch der Spannrahmen (3,4,5) gegen Bearbeitungswerkzeuge aufweisen.

15. Vorrichtung nach Anspruch 10 oder einem der folgenden, dadurch **gekennzeichnet**, daß die Manipulatoren (11) als Industrieroboter ausgebildet sind.

16. Vorrichtung nach Anspruch 10 oder einem der folgenden, dadurch **gekennzeichnet**, daß die Spannrahmen (3,4,5) aneinander abstützbar sind und Positioniervorrichtungen (12) zur gegenseitigen Positionierung und Verriegelung aufweisen.

17. Vorrichtung nach Anspruch 16, dadurch **gekennzeichnet**, daß die Spannrahmen (3,4,5) ein selbsttragendes Spannrahmengehäuse (2) bilden.

18. Vorrichtung nach Anspruch 16 oder 17, dadurch **gekennzeichnet**, daß die Spannrahmen (3,4,5) zu einem ringförmig oder kubisch geschlossenen Spannrahmengehäuse (2) zusammensetzbar sind.

19. Vorrichtung nach Anspruch 16, 17 oder 18, dadurch **gekennzeichnet**, daß die Positioniervorrichtungen (12) starre und/oder bewegliche Zapfen (13) und korrespondierende Aufnahmeöffnungen (14) aufweisen.

20. Vorrichtung nach Anspruch 16 oder einem der folgenden, dadurch **gekennzeichnet**, daß die Positioniervorrichtungen (12) seitlich beabstandete Stützen (15) zur kippsicheren Verbindung der Seitenrahmen (4) mit dem Bodenrahmen (3) und/oder dem Dachrahmen (5) aufweisen.

21. Vorrichtung nach Anspruch 19 oder 20, dadurch **gekennzeichnet**, daß ein oder mehrere Zapfen (13) einen fernsteuerbaren Zapfenantrieb (16) aufweisen.

## Claims

1. Method of supplying, clamping and machining component parts (7,8,9) of a vehicle body (6) in a machining station (1), the component parts (7,8,9) being clamped onto one or more clamping frames (3,4,5) and being supplied separately or on the clamping frames (3,4,5), the clamping frames (3,4,5) being handled and supplied by one or more multiple-axis manipulators (11), characterized in that the manipulators (11) assemble the clamping frames (3,4,5) so as to form a clamping frame housing (2) surrounding the component parts (7,8,9) on several sides.

2. Method according to Claim 1, characterized in that the floor frame (3) loaded with an underbody (7) is brought into the machining station (1) on a conveyor (10).

3. Method according to Claim 1 or 2, characterized in that the manipulators (11) supply one or more loaded side frames (4).

4. Method according to Claim 1, 2 or 3, characterized in that the manipulators (11) supply one or more loaded roof frames (4) [sic].

5. Method according to Claim or one of the following [sic], characterized in that the manipulators (11) with the clamping frames (4,5) remove the component parts (7,8,9) of the body from a store (20).

6. Method according to one of Claims 1 to 5, characterized in that the clamping frames (3,4,5) are braced against one another, positioned and locked.

7. Method according to Claim 1 or one of the following, characterized in that the manipulators (11) release the clamping frames (3,4,5) after positioning, exchange them for machining tools and machine the component parts (7,8,9).

8. Method according to Claim 1 or one of the following, characterized in that the manipulators (11), during or after machining, free the clamping frames (3,4,5) from the assembled housing unit and from the component parts (7,8,9) and convey them back to a receiving device (21).

9. Method according to Claim 1 or one of the following, characterized in that the manipulators (11) perform several machining operations on the component parts (7,8,9).

10. Device for supplying, clamping and machining component parts of a vehicle body in a machining station with several clamping frames, one or several multiple-axis manipulators (11) being arranged in the region of the machining station (1), said manipulators (11) handling at least one clamping frame (3,4,5) which can be loaded with component parts (7,8,9), characterized in that the clamping frames (3,4,5) can be assembled so as to form a clamping frame housing (2) surrounding the component parts (7,8,9) on several sides.

11. Device according to Claim 10, characterized in that the machining station (1) has a store (20) for providing component parts (7,8,9) and clamping frames (3,4,5).

12. Device according to Claim 10 or 11, characterized in that the store (20) has several movable structures (22) for storing components parts (7,8,9) of the body.

13. Device according to Claim 10, 11 or 12, characterized in that the structures (22) have at least one receiving device (21) for clamping frames (3,4,5).

14. Device according to Claim 10 or one of the following, characterized in that the manipulators (11) have exchange coupling systems which exchange the clamping frames (3,4,5) for machining tools.

15. Device according to Claim 10 or one of the following, characterized in that the manipulators (11) are designed as industrial robots.

16. Device according to Claim 10 or one of the following, characterized in that the clamping frames (3,4,5) can be braced against one another and have positioning devices (12) for mutual positioning and locking.

17. Device according to Claim 16, characterized in that the clamping frames (3,4,5) form a self-supporting clamping frame housing (2).

18. Device according to Claim 16 or 17, characterized in that the clamping frames (3,4,5) can be assembled so as to form an annular or cube-shaped, closed, clamping frame housing (2).

19. Device according to Claim 16, 17 or 18, characterized in that the positioning devices (12) have rigid and/or movable pins (13) and corresponding receiving openings (14).

20. Device according to Claim 16 or one of the following, characterized in that the positioning devices (12) have support pillars (15) located laterally at a distance for connecting the side frames (4) to the floor frame (3) and/or to the roof frame (5) without tilting.

21. Device according to Claim 19 or 20, characterized in that one or more pins (13) have a remotely controllable pin drive (16).

## Revendications

1. Procédé pour amener, bloquer et usiner des pièces (7,8,9) d'une caisse (6) de véhicule automobile dans un poste (1) d'usinage, les pièces (7,8,9) étant serrées sur un ou sur plusieurs cadres (3,4,5) de bloquage et étant amenées séparément ou sur les cadres (3,4,5) de bloquage, les cadres (3,4,5) de bloquage étant manipulés et amenés par un ou par plusieurs manipulateurs (11) à axes multiples, caractérisé en ce que les manipulateurs (11) assemblent les cadres (3,4,5) de bloquage en une enveloppe (2) de cadres de bloquage entourant les pièces (7,8,9) de plusieurs côtés.

2. Procédé suivant la revendication 1, caractérisé en ce que le cadre (3) de fond chargé d'un groupe (7) de fond est monté sur un transporteur (10) dans le poste (1) d'usinage.

3. Procédé suivant la revendication 1 ou 2, caractérisé en ce que les manipulateurs (11) amènent un ou plusieurs cadres (4) latéraux chargés.

4. Procédé suivant la revendication 1,2 ou 3 caractérisé en ce que les manipulateurs (11) amènent un ou plusieurs cadres (4) de toit chargés.

5. Procédé suivant l'une des revendications précédentes, caractérisé en ce que les manipulateurs (11) prélèvent avec les cadres (4,5) de bloquage les pièces (7,8,9) de caisse d'un magasin (20).

6. Procédé suivant l'une des revendications 1 à 5, caractérisé en ce que les cadres (3,4,5) de bloquage se supportent les uns les autres, sont positionnés les uns vis-à-vis des autres et se verrouillent les uns les autres.

7. Procédé suivant la revendication 1 ou l'une des suivantes, caractérisé en ce que les manipulateurs (11) libèrent les cadres (3,4,5) de bloquage après le positionnement, les échangent contre des outils d'usinage, et usinent les pièces (7,8,9).

8. Procédé suivant la revendication 1 ou l'une des suivantes, caractérisé en ce que les manipulateurs (11) relâchent les cadres (3,4,5) de bloquage, pendant l'usinage ou après l'usinage, de la liaison avec l'enveloppe et des pièces (7,8,9) et les renvoient à un logement (21).

9. Procédé suivant la revendication 1 ou l'une des suivantes, caractérisé en ce que les manipulateurs (11) effectuent plusieurs étapes d'usinage sur les pièces (7,8,9).

10. Dispositif pour amener, bloquer et usiner des pièces d'une caisse d'une véhicule automobile dans un poste d'usinage comportant plusieurs cadres de bloquage, un ou plusieurs manipulateurs (11) à axes multiples étant disposés dans la région du poste (1) d'usinage, ces manipulateurs actionnant au moins un cadre (3,4,5) de bloquage pouvant être chargé de pièces (7,8,9), caractérisé en ce que les cadres (3,4,5) de bloquage peuvent être assemblés en une enveloppe (2) de cadres de bloquage entourant les pièces (7,8,9) de plusieurs côtés.

11. Dispositif suivant la revendication 10, caractérisé en ce que le poste (1) d'usinage comporte un magasin (20) pour la mise à disposition de pièces (7,8,9) et de cadres (3,4,5) de bloquage.

12. Dispositif suivant la revendication 10 ou 11, caractérisé en ce que le magasin (20) comporte plusieurs étagères (22) mobiles pour la mise en réserve de pièces (7,8,9) de caisse.

13. Dispositif suivant la revendication 10, 11 ou 12, caractérisé en ce que les étagères (22) comportent au moins un logement (21) pour des cadres (3,4,5) de bloquage.

14. Dispositif suivant la revendication 10 ou l'une des suivantes, caractérisé en ce que les manipulateurs (11) comportent des couplages d'échange pour échanger les cadres (3,4,5) de bloquage contre des outils d'usinage.

15. Dispositif suivant la revendication 10 ou l'une des suivantes, caractérisé en ce que les manipulateurs (11) sont formés en tant que robot industriel.

16. Dispositif suivant la revendication 10 ou l'une des suivantes, caractérisé en ce que les cadres (3,4,5) de bloquage peuvent être appuyés les uns sur les autres et comportent des dispositifs (12) de positionnement pour un positionnement mutuel et un verrouillage mutuel.

17. Dispositif suivant la revendication 16, caractérisé en ce les cadres (3,4,5) de bloquage forment une enveloppe (2) de cadres de bloquage autoportante.

18. Dispositif suivant la revendication 16 ou 17, caractérisé en ce que les cadres (3,4,5) de bloquage sont assemblés en une enveloppe (2) de cadres de bloquage fermée cubique ou en forme d'anneau.

19. Dispositif suivant la revendication 16, 17 ou 18, caractérisé en ce que les dispositifs (12) de positionnement comportent des tétons (13) mobiles et/ou fixes et des ouvertures (14) de réception correspondantes.

20. Dispositif suivant la revendication 16 ou l'une des suivantes, caractérisé en ce que les dispositifs (12) de positionnement comportent latéralement des supports (15) à distance pour une liaison, empêchant tout basculement, du cadre (4) latéral avec le cadre (3) de fond et/ou le cadre (5) de toit.

21. Dispositif suivant la revendication 19 ou 20, caractérisé en ce que un ou plusieurs tétons (13) comportent un dispositif (16) d'entraînement de téton pouvant être commandé à distance.
